(19) Europäisches Patentamt
European Patent Office
Office européen des brevets

(11) Numéro de publication: **0 171 357**
**B1**

(12) **FASCICULE DE BREVET EUROPEEN**

(45) Date de publication du fascicule du brevet: **23.01.91**

(51) Int. Cl.$^5$: **C 02 F 1/46,** C 02 F 5/02

(21) Numéro de dépôt: **85810316.1**

(22) Date de dépôt: **08.07.85**

(54) **Procédé et dispositif pour déminéraliser de l'eau.**

(30) Priorité: **10.07.84 CH 3329/84**

(43) Date de publication de la demande:
**12.02.86 Bulletin 86/07**

(45) Mention de la délivrance du brevet:
**23.01.91 Bulletin 91/04**

(84) Etats contractants désignés:
**AT BE CH DE FR GB IT LI LU NL SE**

(56) Documents cités:
**EP-A- 141 780**
**DE-A-2 137 808**
**FR-A-2 108 035**
**FR-A-2 244 842**
**US-A-1 831 075**
**US-A-4 004 994**

(73) Titulaire: **BATTELLE MEMORIAL INSTITUTE**
**7 route de Drize**
**CH-1227 Carouge/Genève (CH)**

(72) Inventeur: **Porta, Augusto**
**52, route de Drize**
**CH-1227 Carouge (CH)**
Inventeur: **Schaub, Maurice**
**Lieu dit Le Fougueux**
**F-74550 Perrignier (FR)**

(74) Mandataire: **Dousse, Blasco et al**
**7, route de Drize**
**CH-1227 Carouge/Genève (CH)**

**EP 0 171 357 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a trait à un procédé et à un dispositif pour déminéraliser de l'eau, de préférence à usage domestique.

On sait que, dans de nombreuses utilisations domestiques de l'eau, il est avantageux d'employer de l'eau adoucie ou déminéralisée. En effet, les ions $Ca^{++}$ et $Mg^{++}$ responsables de cette dureté risquent, à la longue, de former des dépôts et d'obstruer les conduites d'eau dans de nombreux appareils ménagers, tels des fers à repasser à vapeur, des machines à café, des machines à layer la vaisselle ou le linge. En ce qui concerne le lavage du linge, l'utilisation d'eau déminéralisée pour le rinçage du linge est très favorable pour rendre le linge doux au toucher.

On a déjà proposé de déminéraliser de l'eau à l'aide d'une résine échangeuse d'ions, toutefois cette méthode nécessite soit le remplacement, soit la régénération de la résine à intervalles réguliers. On a également proposé dans le document DE—B—2,904,539 d'éliminer des ions de métal lourd dissous dans de l'eau à l'aide d'une cellule électrolytique contenant un matériau poreux et conducteur de l'électricité, destiné à jouer le rôle de cathode et, de plus, une membrane semi-perméable. L'élimination des ions métalliques est obtenue par dépôt cathodique de ceux-ci dans le matériau poreux qui doit donc être changé régulièrement après saturation.

Le document US—A—4,048,030 décrit une cellule électrolytique pour désinfecter, purifier ou adoucir de l'eau. Dans ce dernier cas, la cellule comporte notamment un compartiment cathodique contenant des particules poreuses, de préférence imprégnées, au moins partiellement, de résine échangeuse d'ions. Ce dispositif permet, certes, de précipiter des ions $Ca^{++}$ sous forme de chaux, mais à la condition que le pH de l'eau dans la cellule soit voisin de 10 à 11. Or, le brassage dû au lit fluidisé a pour conséquence d'uniformiser d'alcalinité de l'eau dans le compartiment cathodique et il faut nécessairement utiliser une membrane semi-perméable pour obtenir le pH nécessaire à la précipitation des ions $Ca^{++}$. Il est, de plus, indispensable d'utiliser un filtre à l'extérieur de la cellule électrolytique pour retenir les particules précipitées, ce filtre devant évidement être régénéré à intervalles réguliers.

Le procédé de l'invention, tel que défini à la revendication 1, permet de remédier aux inconvénients des techniques antérieures. En effet, la matière poreuse de la cellule électrolytique permet de précipiter une quantité de calcium et de magnésium sensiblement plus grande que dans les procédés antérieurs en raison de l'étendue de la surface de matière isolante accessible au dépôt. De plus, ce milieu agit à la fois comme catalyseur de précipitation et comme filtre, c'est-à-dire qu'il retient, dans ses pores, les particules de solides se formant sans l'influence du pH de la solution cathodique.

Dans l'état de la technique, on cite encore les documents suivants:

Le document US—A—4,004,994 décrit une cellule électrolytique de décontamination de solutions aqueuses circulant dans celle-ci comprenant un lit de particules conductrices de l'électricité. Celles-ci jouent le rôle d'électrodes bipolaires et contribuent à renforcer l'effet électrolytique de la cathode et de l'anode. Cette cellule ne comporte pas de matière poreuse inerte fournissant un support absorbant les solides précipités au voisinage de la cathode.

Le document US—A—1,831,075 décrit un dispositif de purification électrolytique de l'eau par coagulation des solides contenus dans cette eau et séparation de ceux-ci par filtration. La cellule électrolytique mise en oeuvre comprend une série d'électrodes positives et négatives perméables à l'eau (grilles) superposées en alternance et séparées les unes des autres par un matériau filtrant (sable) qui retient les matières coagulées au voisinage des électrodes. Constructivement, la cellule illustrant la présente demande diffère essentiellment de celle de la référence. En effet, les électrodes de cette dernière sont perméables à l'eau et interposées perpendiculairement sur le passage de celle-ci; dans l'invention, le courant d'eau ne travese pas les électrodes, celles-ci étant disposées de part et d'autre de la cellule, parallèlement au déplacement de celui-ci. Il existe donc, au sein de la matière filtrante, un gradient de potentiel (et donc de pH) permettant une précipitation sélective des ions à éliminer dans certaines zones distinctes de celle-ci, cette disposition favorisant l'efficacité de l'adoucissement et, ultérieurement, de la régénération de la matière filtrante.

L'enseignement du document DE—A—2.137.808 est similaire à celui du document US—A—4,004,994. Comme ce dernier, il décrit une cellule d'électrolyse contenant un lit de particules de charbon. Les impuretés précipitées au voisinage des électrodes ou de ces particules sont ensuite retenues par des filtres ou par décantation. De tels filtres ne sont cependant pas interposés entre les électrodes.

Le document FR—A—2.244.842 décrit un dispositif comprenant des cuves à électrolyse pour le traitement électrochimique d'effluents résiduaires dans lesquelles le courant de liquide à purifier circule parallèlement aux électrodes comme dans l'invention. Entre ces électrodes se trouve disposé un lit fluidisé de particules isolantes dont la fonction est de modifier les paramètres d'écoulement dudit liquide et, par cela, d'améliorer l'efficacité électrochimique des électrodes. Ces particules isolantes, en verre ou en plastique, de 0,5 à 2 mm de diamètre n'ont pas une fonction filtrant et, de plus, elles sont mobiles.

Le document FR-2.108.035 concerne des techniques de revêtements par voie électrolytique.

La matière poreuse utilisée dans le procédé de la présente invention est une résine expansée à pores ouverts telle qu'une mousse de polyuréthanne, de polyurée, de polystyrène, polyalkyde, polyéthylène et autres mousses de résines usuelles, ou une ceramique poreuse, à pores ouverts, ou du graphite en

granules, celles-ci étant maintenues sous forme d'un lit compact par une membrane perforée inerte, par exemple une grille de nylon.

La porosité de la masse est, de préférence, choisie pour présenter, à la fois, une grande étendue de surface disponible et un diamétre de pores suffisant pour ne pas faire obstacle à la libre circulation de l'eau traversant la cellule électrolytique. De préférence, la dimension des pores est de l'order de quelques microns à 2—3 mm et la surface accessible à la précipitation de l'ordre de 1 à 100 $m^2/g$ de matière poreuse.

On notera encore que l'existence d'une massé poreuse occupant au moins une partie du volume intérieur de la cellule et, de préférence en contact ou au voisinage immédiat de la cathode, présente encore les avantages suivants: elle prévient les mouvements de déplacement du liquide, par exemple les mouvements tourbillonnaires ou de convection qui seraient susceptibles de provoquer un mélange indésirable de la phase anodique (acide) avec la phase cathodique (alcaline), le pH de cette dernière étant responsable de l'élimination, par précipitation, des ions métalliques de l'eau. Ainsi, grâce à pa présence de la matière poreuse, un gradient stable de pH peut se maintenir, non perturbé, dans la cellule, de telles conditions favorisant le rendement énergétique élevé du présent processus d'adoucissement. Ainsi, en quelque sorte, la matière poreuse (laquelle se trouve de préférence dans la zone influencée par la cathode où le pH est suffisamment élevé pour provoquer la précipitation des ions métalliques, pH=9—12) joue le rôle d'un séparateur statique entre les électrodes, les produits engendrés à l'anode (ions $H^+$) étant, tout au moins en partie, empêchés de réagir avec les produits engendrés à la cathode (ions $OH^-$).

Les ions OH sont fournis par la réaction suivante:

$$2H_2O+2e \rightarrow 2OH^-+H_2$$

Par ailleurs, à l'anode, une réaction d'oxydation correspondante fournit de l'oxygène, ces deux gaz se dissolvant progressivement dans l'eau adoucie et se dégageant ultérieurement.

Les conditions d'électrolyse convenant au présent procédé varient entre de larges limites suivant la nature de l'eau à adoucir, son degré de minéralisation, les paramètres géométriques de la cellule électrolytique utilisée, le débit de l'eau et autres facteurs évidents pour l'homme de métier. De manière générale, on préfère opérer avec des électrodes couramment utilisées pour l'électrolyse de l'eau, telles que celles en graphite ou en titane platiné.

On préfère travailler avec des tensions de 10 à 100 V et des densités de courant de l'ordre de 0,1 à 2,5 A/$dm^2$.

Le présent procédé est mis en oeuvre au moyen du dispositif suivant la revendication 4.

Le dessin annexé illustre schématiquement et à titre d'exemple une forme d'exécution d'un tel dispositif.

La cellule électrolytique 1 comporte un orifice d'entrée 2, relié à une amenée d'eau à déminéraliser (non représentée) par une conduite 3, et un orifice de sortie 4, débouchant dans une conduite de sortie 5, celle-ci étant reliée à un dispositif d'utilisation (non représenté). Cette cellule 1 contient une anode 6 et une cathode 7 disposées selon des plans parallèles et une plaque de matière poreuse non conductrice 8 placée entre cette anode et cette cathode. Comme on le voit au dessin, la plaque occupe la totalité du volume compris entre l'anode et la cathode; toutefois, cette plaque pourrait n'occuper qu'une portion de ce volume, pour autant qu'elle reste à proximité immédiate ou en contact avec la cathode 7.

Lorsque les électrodes 6 et 7 sont reliées à une source de courant continu (non représentée), les cations $Ca^{++}$ et $Mg^{++}$ dissous dans l'eau sont attirés par la cathode et migrent en direction de celle-ci. En arrivant dans la zone de la plaque poreuse où règne un pH élevé (9 à 12), ces cations se transforment en hydroxydes ou en oxydes insolubles qui précipient et se déposent dans les pores de la matière poreuse dont ils tapissent les parois.

Il faut noter que, en raison de ses pores ouverts de dimensions relativement grandes, le matière constituant la plaque, dont au moins la surface est isolante, n'agit pas comme une membrane semi-perméable mais bien comme un élément favorisant la précipitation des hydroxydes dans la zone où règne un pH élevé. Elle agit, de plus, comme élément filtrant.

On peut, bien entendu, parfaire l'adoucissement de l'eau au moyen du dispositif ci-dessus en la faisant recirculer plusieurs fois dans celui-ci, par example en reliant les conduuhs 3 et 5 à une réserve d'eau non déminéralisée de manière à constituer un circuit permettant de faire repasser l'eau à deux ou plusieurs reprises dans la cellule 1, ce processus étant poursuivi jusqu'à diminution de la dureté de l'eau jusqu'à une valeur désirée. L'eau déminéralisée peut ensuite être acheminée vers un dispositif utilisateur quelconque.

Il est possible de régénérer la matière de la plaque poreuse en inversant le sens de circulation du courant dans les électrodes 6 et 7, la cathode se transformant alors en anode et, respectivement, l'anode en cathode. La conduite 3 reste branchée à une alimentation en eau non déminéralisée dans la conduite 5 est reliée à une canalisation permettant l'évacuation des eaux usées. L'acide engendré au voisinage de l'électrode maintenant positive dissout les matières précipitées retenues dans la plaque 8 et les produits de dissolution sont finalement évacués par la conduite 5.

A titre d'exemple d'utilisation du dispositif selon l'invention, on a relié une cellule électrolytique du type représenté au dessin à une réserve de 20 litres d'eau à déminéraliser et on a établi un circulation d'eau à un débit compris entre 0,5 et 1,5 litres par minute. La cellule utilisée avait la forme d'un parallélépipède rectangle, la cavité intérieure mesurait 13 cm de largeur, 20 cm de hauteur et 2,5 cm de profondeur, chaque

électrode était constituée d'une grille rectangulaire en titane platiné de 250 $cm^2$. La structure poreuse en contact avec les deux électrodes avait une surface d'environ 250 $cm^2$, elle était soit constituée d'une plaque de graphite poreux isolée par une grille de nylon, soit d'une mousse de polyuréthane fine dont les pores avaient une taille comprise entre 3 µm et 0,05 mm, soit encore d'une mousse de polyuréthane grossière dont les pores avaient une taille comprise entre 0,05 mm et 3 mm.

La tableau ci-dessous résume les résultats expérimentaux obtenus à l'aide de cette cellule.

| Plaque épaisseur (cm) | Poreuse type | Ecoulement débit (l/min) | Alimentation électrique | | Dureté de l'eau | |
|---|---|---|---|---|---|---|
| | | | courant (A) | énergie totale (Ah) | initiale mg 1l | finale mg 1l |
| 1 | Mousse PU fine | 0,5 | 3,8 | 3 | 200 | 80 |
| 1 | " " | 0,5 | 3,2 | | 140 | 40 |
| 1 | Mousse de graphite | 0,5 | 5 | 3 | 140 | 80 |
| 2 | Mousse PU grossière | 0,5 | 4 | 4 | 220 | 136 |
| 1 | Mousse PU fine | 1,5 | 3 | 2,3 | 208 | 160 |

Il est bien évident que l'on pourra également utiliser d'autres matériaux poreux que ceux décrits dans le présent exemple, comme par exemple des céramuques poreuses conneus pour être utilisées comme filtres.

**Revendications**

1. Procédé pour adoucir de l'eau, dont la dureté résulte essentiellement de la présence d'ions Ca et Mg, par passage de celle-ci dans une cellule d'électrolyse comportant, outre une anode, une cathode au voisinage de laquelle le pH alcalin créé par le courant d'électrolyse provoque la précipitation des ions Ca et Mg sous forme de leurs oxydes ou hydroxydes solides, caractérisé par le fait que, ces électrodes sont disposées de part et d'autre et parallèlement au trajet de l'eau à l'intérieur de la cellule, qu'on interpose sur le passage de celle-ci entre les électrodes une masse de matière poreuse inerte constituée d'une résine expansée ou en mousse, ou d'une céramique poreuse, ou d'un lit compact de granules minérales régularisant l'écoulement de l'eau dans la cellule et fournissant un support matériel de grande surface disponible sur lequel se déposent les solides précipités.

2. Procédé suivant la revendication 1, caractérisé par le fait que ladite matière poreuse est une mousse de résine expansée dont les pores, ouverts, ont une dimension de 20 µm à 3 mm et dont la surface accessible au dépôt est de 1 à 100 $m^2/g$.

3. Procédé suivant la revendication 1, caractérisé par le fait que, pour régénérer la masse poreuse, l'on inverse la polarité des électrodes, la cathode devenant une anode, respectivement l'anode une cathode, de manière à engendrer l'acide au voisinage de l'électrode devenue positive, dissolvant les hydroxydes de métaux précipités dans la masse, la solution résultante étant alors évacuée par le courant d'eau traversant la cellule.

4. Dispositif pour adoucir de l'eau dure par précipitation alcaline des ions Ca et Mg essentiellment responsables de cette dureté constitué par une cellule d'électrolyse comportant une anode et une cathode au voisinage de laquelle se forme, par électrolyse, une solution alcaline et au moins une entrée et une sortie de l'eau à adoucir, caractérisé par le fait que les électrodes sont disposées parallèlement à l'écoulement de l'eau et de part et d'autre de celui-ci et qu'il comprend, en outre, occupant au moins une partie du volume intérieur de ladite cellule entre l'anode et la cathode et en contact ou au voisinage immédiat de la cathode, une masse de matière poreuse à pores ouverts inerte électrochimiquement, lesdits orifices d'entrée et de sortie ainsi que la masse de matière poreuse étant disposée de telle manière qu'au moins une portion de l'eau à adoucir soit contrainte de traverser la masse de matière poreuse entre les électrodes et que son écoulement soit stabilisé par la présence de celle-ci.

**Patentansprüche**

1. Verfahren zum Weichmachen von Wasser, dessen Härte im wesentlichen aus der Anwesenheit von

Ca- und Mg-Ionen resultiert, durch Hindurchführen des Wassers in einer Elektrolysezelle, die neben einer Anode eine Kathode aufweist, wobei in der Nähe der Anode der durch den Elektrolysestrom hervorgerufene alkalische Ph-Wert die Abscheidung der Ca- und Mg-Ionen in der Form ihrer festen Oxyde oder Hydroxyde bewirkt, dadurch gekennzeichnet, daß diese Elektroden beiderseits und parallel zum Lauf des Wassers im Inneren der Zelle angeordnet sind, daß man auf die Hindurchführung des Wassers zwischen den Elektroden eine Masse eines inerten, porösen Materials zur Einwirkung bringt, die aus einem expandierten oder schaumförmigen Harz oder einer porösen Keramik oder einem kompakten Bett mineraler Granulate besteht, die das Abfließen des Wassers in der Zelle regelt und einen materiellene Träger großer verfügbarer Oberfläche bildet, auf der sich die abgeschiedenen Feststoffe niederschlagen.

2. Verfahren nach Anspruch 1, dadurch gekennzeichnet, daß das poröse Material ein Schaum aus expandiertem Harz ist, dessen offene Poren eine Abmessung von 20 µm bis 3 mm aufweisen und dessen für den Niederschlag zur Verfügung stehende Oberfläche im Bereich von 1 bis 100 $m^2/g$ liegt.

3. Verfahren nach Anspruch 1, dadurch gekennzeichnet, daß man zur Regenerierung der porösen Masse die Polarität der Elektroden umkehrt, wobei die Kathode zur Anode und die Anode zur Kathode wird, um die Säure in der Nähe der positiv gewordenen Elektrode zu erzeugen, die die in der Masse abgeschiedenen Metallhydroxyde löst, wobei die sich ergebende Lösung danach durch den durch die Zelle hindurchfließenden Wasserstrom abgeführt wird.

4. Vorrichtung zum Weichmachen von hartem Wasser durch alkalische Abscheidung von Ca- und Mg-Ionen, die im wesentlichen für diese Härte verantworlich sind, bestehend aus einer Elektrolysezelle mit einer Anode und einer Kathode, wobei sich in der Nähe derselben durch Elektrolyse eine alkalische Lösung bildet, und mindestens einem Einlaß und einem Auslaß für das weichzumachende Wasser, dadurch gekennzeichnet, daß die Elektroden parallel zur Abfließen des Wassers und beiderseits desselben angeordnet sind und daß sie darüber hinaus eine Masse aus einem elektochemisch inerten porösen Material mit offenen Poren umfaßt, die mindestens einen Teil des inneren Volumens der Zelle zwischen der Anode und der Kathode und in Berührung oder in unmittelbarer Nähe der Kathode einnimmt, wobei die Einlaß- und Auslaßöffnungen und die Masse des porösen Materials derart angeordnet sind, daß mindestens ein Teil des weichzumachenden Wasser gezwungen wird, die Masse des porösen Materials zwischen den Elektroden zu durchströmen, und daß sein Abfluß durch die Anwesenheit der Masse stabilisiert wird.

**Claims**

1. A method of water softening, the hardening ions of the water to be softened being essentially Ca and Mg, consisting of passing the water through an electrolysis cell comprising, further to an anode, a cathode in the neighborhood of which an alcaline pH generated by the electrolysis current causes Ca and Mg ions to precipitate as solid oxides or hydroxides, characterized in that these electrodes are placed on both sides of the water flow in the cell and parallel thereto, and in that a body of inert porous material is located between the electrode in crossing relation with said water flow, said porous material being either a foamed or expanded resin, or a porous ceramic, or a compact bed of mineral particles, in order to smoothen the flow of water in the cell and to provide a substrate with large effective area on which the precipitated solids will deposit.

2. The method according to Claim 1, characterized in that the porous material is an expanded resin foam having open pores of 20 µm to 3 mm size and whose effective surface for deposition is of 1 to 100 $m^2/g$.

3. The method of Claim 1, characterized in that regeneration of the porous mass is brought about by inversing the electrode polarity, the cathode becoming an anode and the anode becoming a cathode, respectively, so that an acidic medium is generated in the vicinity of the now positive electrode, this being for dissolving the metal hydroxides precipitated in the porous body, and the resulting solution is then discharged out of the cell by the water flowing therethrough.

4. A hard water softening device in which Ca and Mg ions which essentially cause this hardness of the water are precipitated under alkaline conditions, this device consisting of an electrolytic cell comprising an anode and a cathode in the vicinity of which an alkaline solution will form under electrolysis, and comprising at least one input opening for the water to be softened and one output opening, characterized in that the electrodes are placed on both sides of the flow of water in the cell and parallel thereto, in that the device further comprises in at least a portion of the inside space of the cell between the anode and the cathode and in close vicinity to the latter a body of material with open porosity, electrochemically inert, and in that the said input and output openings are arranged vis a vis the porous material body so that at least a portion of the water to be softened is caused to flow across said body of porous material between the electrodes whereby its flowing rate is consecutively made steady.

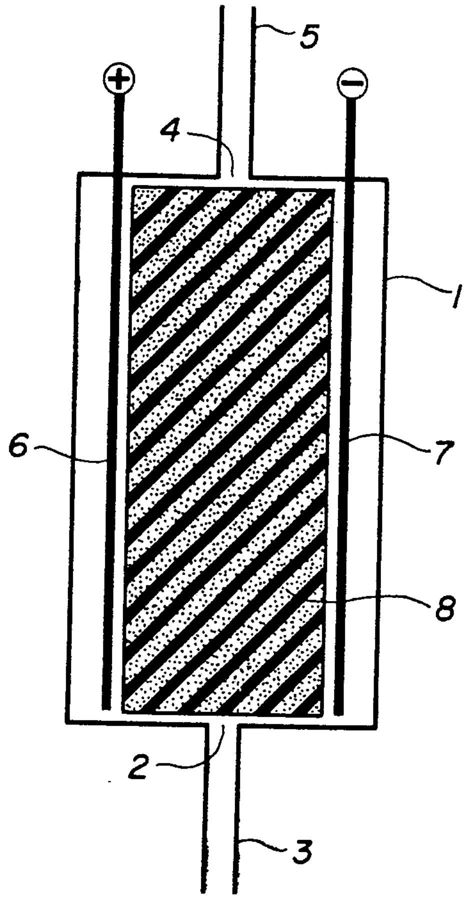
5
4
1
6
7
8
2
3